(19) Europäisches Patentamt
European Patent Office
Office européen des brevets

(11) **EP 2 643 092 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**04.11.2020   Patentblatt 2020/45**

(45) Hinweis auf die Patenterteilung:
**17.01.2018   Patentblatt 2018/03**

(21) Anmeldenummer: **11785417.4**

(22) Anmeldetag: **21.11.2011**

(51) Int Cl.:
***B04B 11/02*** (2006.01)          ***B04B 11/04*** (2006.01)
***B04B 1/08*** (2006.01)

(86) Internationale Anmeldenummer:
**PCT/EP2011/070528**

(87) Internationale Veröffentlichungsnummer:
**WO 2012/069398 (31.05.2012 Gazette 2012/22)**

(54) **GETAKTETE PRODUKTZUFUHR BEI EINER ZENTRIFUGE UND ZENTRIFUGE DAFÜR**

METHOD FOR PROCESSING A PRODUCT IN A CENTRIFUGAL FIELD

PROCÉDÉ DE TRAITEMENT D'UN PRODUIT DANS LE CHAMP CENTRIFUGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.11.2010   DE 102010052301**

(43) Veröffentlichungstag der Anmeldung:
**02.10.2013   Patentblatt 2013/40**

(73) Patentinhaber: **GEA Mechanical Equipment GmbH 59302 Oelde (DE)**

(72) Erfinder:
• **KÖNIG, Julian**
  **33098 Paderborn (DE)**
• **TERWEY, Bernd**
  **48653 Coesfeld (DE)**
• **MACKEL, Wilfried**
  **59510 Lippetal-Herzfeld (DE)**
• **PENKL, Andreas**
  **59510 Lippetal (DE)**
• **BATHELT, Thomas**
  **59302 Oelde (DE)**
• **QUITER, Kathrin**
  **48317 Drensteinfurt (DE)**

(74) Vertreter: **Specht, Peter et al Loesenbeck - Specht - Dantz Patent- und Rechtsanwälte Am Zwinger 2 33602 Bielefeld (DE)**

(56) Entgegenhaltungen:
WO-A1-2005/065835       DE-C- 566 199
US-A- 3 786 919

EP 2 643 092 B2

**Beschreibung**

Die vorliegende Erfindung betrifft ein Verfahren nach dem Oberbegriff des Anspruchs 1 und eine Zentrifuge, insbesondere einen Separator, nach dem Oberbegriff des Anspruchs 15.

Bei Separatoren mit Tellerpaketen erfolgt das Abscheiden von Partikeln aus einer Flüssigkeit bzw. aus Volumenströmen in den Zwischenräumen der Teller, den sogenannten Tellerspalten, unter stationären Bedingungen. Diese Arbeitsweise will die Erfindung optimieren.

Es ist daher die Aufgabe der vorliegenden Erfindung ein verbessertes Verfahren zur Verarbeitung einer Flüssigkeit bereit zu stellen, sowie eine Zentrifuge zu schaffen, welche eine effektivere Verarbeitung einer Flüssigkeit ermöglicht.

Die Erfindung löst diese Aufgabe durch die Merkmale der Ansprüche 1 und 15.

Durch das getaktete Zuführen des zu verarbeitenden Produktes in die Zentrifugentrommel wird ein getakteter Zulaufstrom in den Tellerspalten bzw. den Zwischenräumen zwischen den Tellern in der Zentrifuge erzeugt, sodass im jeweiligen Tellerspalt ein fluktuierender Volumenstrom gebildet wird oder ein Volumenstrom, welcher ausgehend von einem Maximum zeitweilig reduziert wird und/oder vollständig zum Erliegen kommt. "Getaktet" bedeutet dabei, dass der Zulaufstrom "immer wieder mehrfach bzw. vielfach" wiederholt verändert wird, und zwar entweder mit konstanter Taktfrequenz pro Zeiteinheit oder nicht mit konstanter Taktfrequenz, aber doch pro Zeiteinheit T1 (beispielsweise eine Minute oder eine Sekunde) mehrfach.

In den strömungsarmen oder strömungsfreien Zeitabschnitten, wird das Abrutschen der abgesetzten Partikel von der Telleroberfläche in den Trommelinnenraum begünstigt.

Vorzugsweise wird über einen definiert langen Zeitraum T1 ein Produktvolumen V1 zugeführt, wobei das Zuführen des zu verarbeitenden Produktes im getakteten Betrieb derart erfolgt, dass das in die Trommel geleitete Produktvolumen V1 pro Zeitraum T1 gegenüber einer Zufuhr im nicht getakteten Betrieb nicht verändert wird bzw. konstant bleibt. Dies ist besonders vorteilhaft, da insgesamt die Verarbeitungsgeschwindigkeit gegenüber einem nicht getakteten Betrieb nicht reduziert wird aber trotzdem die Vorteile des getakteten Betriebs genutzt werden.

Dabei ist es ferner besonders zweckmäßig, wenn die Zufuhr des zu verarbeitenden Produkts getaktet derart erfolgt, dass in Abhängigkeit von der Zeit eine Zu- und Abnahme des Zulaufstroms um einen Mittelwert herum erfolgt, insbesondere derart, dass der Zulaufstrom im getakteten Betrieb nicht vollständig unterbrochen wird.

Aus der WO 2005/065835 A1 ist es zwar bekannt, zur Vermeidung von Verstopfungen der Durchflusswege eines Separators bei der Trennung von Milch in Ram und Magermilch die Konzentration des Fettgehaltes einer ablaufenden Produktphase zu ermitteln und durch eine kurzzeitige Änderung der Betriebsparameter wie der Zulaufleistung die Trennzone zu verschieben, wenn ein Grenzwert überschritten wird. Die Zulaufleistung wird dabei aber nur einmal kurzzeitig erhöht, wenn eine Verstopfung auftritt, also nur im Ausnahmefall beim Überschreiten eines Grenzwertes.

Aus der DE 566 199 PS ist es zudem bekannt, bei einer Schleudermaschine mit geschlossenem Gehäuse die Zuführung des Gutes unter Druck stoßweise bei gleichzeitigem Verschluss der Ablaufleitung der leichteren Flüssigkeitsphase vorzunehmen, um durch erhöhten Druck in der Trommel gleichzeitig eine Schlammphase durch für diese vorgesehene Austragsöffnungen auszustoßen. Auch hier dient das Takten somit im Grunde zum Lösen von Verstopfungen. Anders als bei der vorliegenden Erfindung wird bei dem stoßweisen Zuführen aber die Ablaufleitung geschlossen. Erfindungsgemäß bleibt der Durchmesser der Ablaufleitung für die Flüssigkeitsphase(n) dagegen unverändert, d.h., der zugeführte Produktvolumenstrom wird getaktet zugeführt, ohne dass dabei die Ablaufleitung(en) für die Flüssigkeitsphase(n) geschlossen oder zusätzlich angedrosselt werden. Denn erfindungsgemäß wird das veränderte Abscheideverhalten im Tellerspalt genutzt, wobei kein Takten des Produktablaufes notwendig ist.

Vorteilhafte Ausgestaltungen der Erfindung sind Gegenstand der abhängigen Ansprüche.

Nachfolgend wird die Erfindung anhand eines Ausführungsbeispiels unter Bezug auf die Zeichnungen näher beschrieben. Es zeigt:

Fig. 1      eine geschnittene Teilansicht einer schematisch dargestellten Separatortrommel;
Fig.2      eine schematische Darstellung eines Tellerspaltes; und
Fig.3a, b      Darstellung des Abscheidegrades bei getakteten und ungetakteten Volumenströmen.

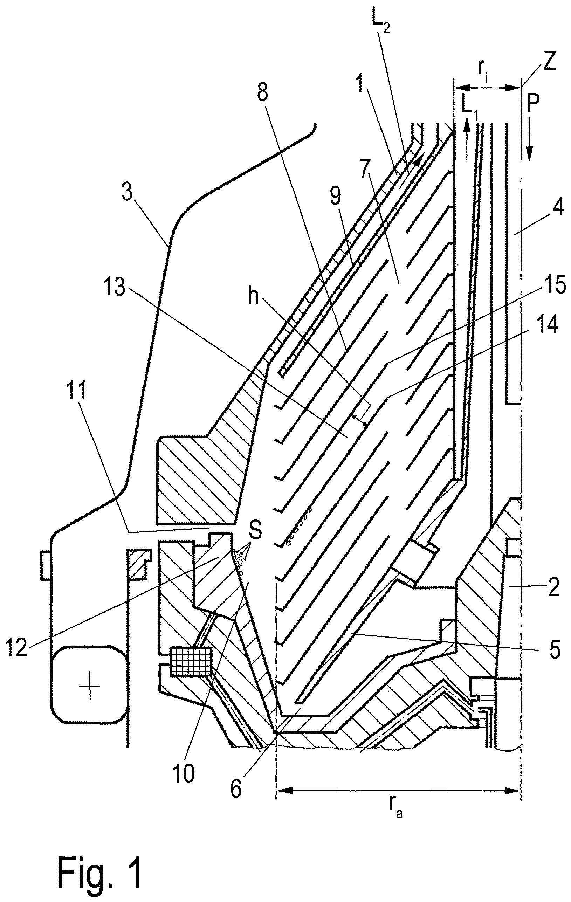

Fig.1 zeigt eine Zentrifugentrommel, hier eine Separatortrommel 1, die eine vertikal ausgerichtete Drehachse Z aufweist.

Die drehbare Separatortrommel 1 ist auf eine Antriebsspindel 2 gesetzt, die beispielsweise direkt oder über einen Riemen angetrieben wird und die, hier nicht dargestellt, drehbar gelagert ist. Die Antriebsspindel 2 ist hier in ihrem oberen Umfangsbereich konisch ausgestaltet. Die Separatortrommel 1 ist von einer sich nicht mit der Trommel drehenden, stillstehenden Haube 3 umgeben. Die vorteilhaft doppelt konische Separatortrommel 1 weist einen Einlauf mit einem Zulaufrohr 4 für ein zu verarbeitendes Produkt P auf, an das sich ein Verteiler 5 anschließt, welcher mit wenigstens einer oder mehreren Auftrittsöffnungen 6 versehen ist, durch welche das zulaufende Produkt bzw. Schleudergut in das Innere der Separatortrommel 1 in das Tellerpakets 8 - geleitet wird. Nach oben wird das Tellerpaket 8 hier optional von einem Scheideteller 9 abgeschlossen. Alternativ ist auch eine Zuleitung vom Verteiler 6 in einen Steigekanal 7 eines Tellerpakets denkbar. Vorzugsweise ist in der Separatortrommel 1 ein Trenntellerpaket angeordnet.

Der Betrieb ist kontinuierlich, d.h. während der Verarbeitung des Schleudergutes wird dieses fortlaufend verarbeitet und fortlaufend aus der Zentrifuge abgeführt.

Dabei werden auch Feststoffe beim Klären aus der Trommel abgeleitet - durch Öffnen eines Kolbenschiebers oder durch Düsen - ohne dass hierzu die Drehung unterbrochen und das Gehäuse der Trommel geöffnet werden muß.

Im Zentrifugalfeld erfolgt hier eine kombinierte Trennung und/oder Klärung des zulaufenden fließfähigen Produktes in hier zwei verschieden schwere Flüssigkeitsphase L1 und L2 und in eine Feststoffphase S.

Die Feststoffphase S wird zwar nach Fig. 1 nach dem Abscheiden in dem Tellerpaket 8 in einen Feststoffaustragsraum 10 transportiert und von dort aus diskontinuierlich durch Feststoffaustragsöffnungen 11 abgeleitet, welche mit Hilfe eines Kolbenschiebers 12 geöffnet und geschlossen werden können. Der Betrieb der Zentrifuge, d.h. die eigentliche Verarbeitung des Schleudergutes erfolgt aber dennoch im kontinuierlichen Betrieb, da die Feststoffe immer wieder abgeleitet werden können, ohne dass hierfür die Drehung unterbrochen werden muß.

Die leichtere Flüssigkeitsphase L1 wird an einem inneren Radius $r_i$ mit einer ersten (hier nicht dargestellten) Schälvorrichtung, aus der Trommel geleitet. Die schwere Flüssigkeitsphase L2 strömt dagegen um den äußeren Umfang des Scheidetellers 9 herum und wird durch eine zweite Schälvorrichtung (hier ebenfalls nicht dargestellt) aus der Separatortrommel 1 abgeleitet.

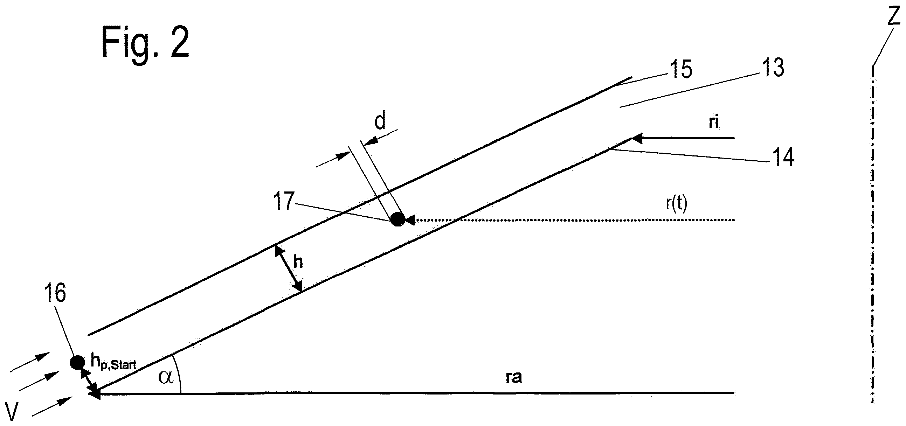

In Fig.2 ist schematisch ein Tellerspalt, also der Zwischenraum 13 zwischen zwei benachbarten Tellern bzw. Trenntellern 14 und 15 des Tellerpakets 8 dargestellt. Der Zulaufstrom ist der Teil des zugeleiteten Volumenstroms, der in einen Tellerspalt fließt, beispielsweise zwischen radialen Laschen, welche die Teller in axialer Richtung zueinander beabstandet halten und welche die Tellerspalte ggf. in Segmente unterteilen.

In Fig.2 weist der Zulaufstrom zwei Partikel auf, wobei ein erstes Partikel 16 sich am Außenradius $r_a$ der Teller 14 und 15 befindet, die mit einer Spaltbreite h voneinander beabstandet sind. Ein zweites Partikel 17 befindet sich direkt zwischen den Tellern 14 und 15 und weist zum Zeitpunkt t einen Radius r zur Drehachse Z auf, welcher kleiner ist als der Außenradius $r_a$ des Tellers 14 oder 15 und größer ist als der Innenradius $r_i$ des Tellers.

Der Zulaufstrom ist vom Außenradius $r_a$ des Tellers 14 oder 15 in Richtung des Innenradius gerichtet, wobei sich Feststoffanteile, wie die Partikel 16 und 17 auf den Trenntellern absetzen. Von dort aus rutschen die Feststoffpartikel aufgrund des Neigungswinkels $\alpha$ des Tellers in den Feststoffaustragsraum 10 ab.

Die Abscheidevorgänge fanden nach dem Stand der Technik bei einem kontinuierlichen Zulaufstrom in dem Tellerspalt statt. Dies erfolgte unter weitgehend stationären Bedingungen. Es hat sich allerdings vorteilhaft gezeigt, dass instationäre Zulaufströme zu einem verbesserten Abscheideverhalten führen können.

Dies sei wie folgt erläutert.

Ein kleines Partikel schwimmt bei vernachlässigbar kleinen Beschleunigungseffekten im Zulaufstrom zunächst mit. Dabei lässt sich die Geschwindigkeit v des Zulaufstroms bzw. des Partikels als Funktion des zurückgelegten Weges in radialer Richtung r(t) in einer bestimmten Zeit t über den Zulaufstrom pro Tellerspalt $Q_T$ und die Mantelfläche des Tellerspaltes A folgendermaßen beschreiben:

$$v_{p,r} = \frac{\partial r}{\partial t} = \frac{Q_T}{A}$$

Die Mantelfläche ist eine Funktion des Radius r des Partikels zur Drehachse Z, der Spaltbreite h des Tellerspaltes und dem Neigungswinkel $\alpha$ des Tellers mit

$$A = 2\pi r \frac{h}{\cos\alpha}$$

Bei Beachtung der Mantelfläche A ergibt sich daher für die Geschwindigkeit des Partikels und des Zulaufstroms beim Radius r eine Differentialgleichung erster Ordnung:

$$\dot{r} = \frac{Q_T}{2\pi rh}\cos\alpha$$

Durch Lösen unter der Randbedingung $r(t = 0) = r_a$ und unter Beachtung der Strömungsrichtung des Zulaufstroms im Tellerspalt ergibt sich für den radialen Partikelabstand zur Drehachse Z über die Zeit t folgende Gleichung:

$$r(t) = \sqrt{r_a^2 - \frac{Q_T t \cos \alpha}{\pi r h}}$$

Die maximale Zeit, $T_{end}$, die ein Partikel im Spalt verbleibt ist bei $r(t) = r_i$ wie folgt:

$$T_{end} = \frac{(r_a^2 - r_i^2)\pi h}{Q_T \cos \alpha}$$

Die Sinkgeschwindigkeit des Partikels im Zentrifugalfeld ist abhängig von dessen radialen Abstand zur Drehachse und damit auch abhängig von der Zeit, wobei $\Delta\varphi$ der Dichteunterschied zwischen Feststoff und Flüssigkeit, d der Partikeldurchmesser, $\omega$ die Winkelgeschwindigkeit und $\eta$ die dynamische Viskosität der Flüssigkeit sind.

$$v_{\sin k}(t) = \frac{d^2 \Delta\varphi\omega^2 r(t)}{18\eta} = \frac{d^2 \Delta\varphi\omega^2 \sqrt{r_a^2 - \frac{Q_T t \cos \alpha}{\pi h}}}{18\eta}$$

Der Abscheideweg h(T), welcher vom Partikel lotrecht innerhalb einer bestimmten Zeit zurückgelegt wird, ist eine Funktion der Sinkgeschwindigkeit und lautet:

$$h_p(T) = \frac{1}{T} \int_0^T v_{\sin k}(t)\partial t * T$$

Durch Integration und Ersetzen der Zeitvariablen T durch t ergibt sich Folgendes:

$$h_p(t) = \frac{d^2 \Delta\varphi\omega^2 \pi h \sin \alpha}{27\eta Q_T \cos \alpha}\left[ r_a^3 - \sqrt{\left( r_a^2 - \frac{Q_T t \cos \alpha}{\pi h}\right)^3} \right]$$

Dabei gilt ein Partikel als abgeschieden, wenn es in der Zeit t den oberen Teller des Tellerspalts erreicht hat. Ein Partikel ist folglich abgeschieden, wenn

$$h_{p,Start} + h_p(t) \geq h$$

mit $t = T_{end}$ erfüllt ist.
Folglich gilt:

$$h - h_{p,Start} \leq \frac{d^2 \Delta\varphi\omega^2 \pi h \tan \alpha}{27\eta Q_T}\left[ r_a^3 - r_i^3 \right]$$

Der Abscheidegrad in Abhängigkeit vom Durchmesser des Partikels $\phi(d)$ kann folglich über folgende Gleichung ausgedrückt werden:

$$\phi(d) = \frac{h}{h_{p,Start}} = \frac{d^2 \Delta\varphi\omega^2 \pi \tan \alpha\left[ r_a^3 - r_i^3 \right]}{27\eta Q_T}$$

Der Abscheidegrad $\phi(d)$ kann für instationäre Zulaufströme $Q_T(t)$ mit verschiedenen Funktionen leichter numerisch mit einem Zeitschrittverfahren gelöst werden.

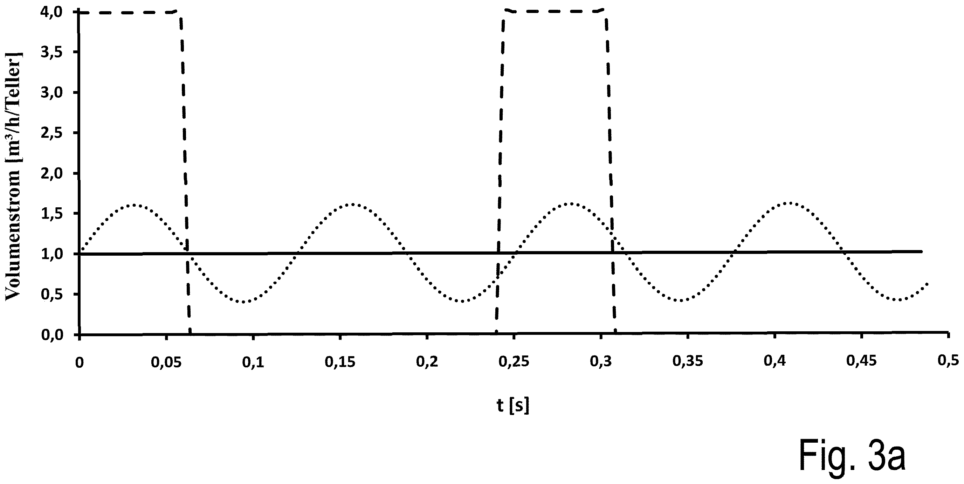

Fig. 3a veranschaulicht verschiedene Varianten einer in Abhängigkeit von der Zeit volumenmäßigen Steuerung des Zulaufstroms. Beispielhaft beträgt der Zulaufstrom hier 1 m³/h je Teller.

Der bekannte Fall eines kontinuierlichen Zulaufstroms ist als durchgehende Linie dargestellt.

Eine gestrichelte Linie zeigt ein zeitweises vollständiges Unterbrechen des Zulaufstroms. Beispielhaft wird hier kurzfristig die vierfache Menge, unterbrochen von einer 4fachen Pause, zugeführt. Insgesamt beträgt der Zulaufstrom derart wieder 1 m³/h je Teller.

Die gepunktete Linie zeigt eine in Abhängigkeit von der Zeit sinusförmige Zu- und Abnahme des Zulaufstroms um einen Mittelwert herum, wobei der Zulaufstrom aber nicht vollständig unterbrochen wird. Auch hier beträgt der Zulaufstrom insgesamt wieder 1 m³/h je Teller.

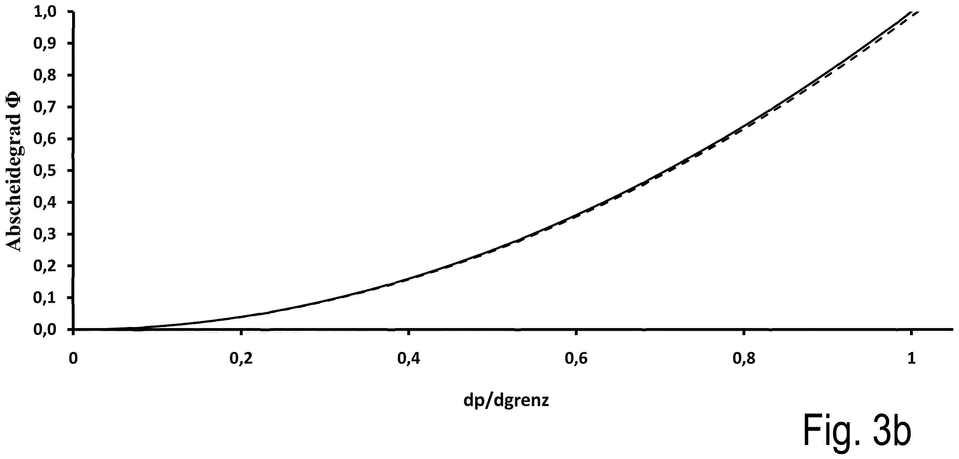

Fig. 3b stellt eine Funktion des Abscheidegrades im Verhältnis zum Partikel- und Grenzkorndurchmesser dar. Man erkennt hierbei, dass sich der Grenzkorndurchmesser der abgeschiedenen Partikel bei getaktetem Zulauf (gestrichelte und gepunktete Linie) verschlechtert.

Allerdings überwiegen die Vorteile der getakteten Betriebsweise, da sich hierbei die Feststoffe ungehindert vom Volumenstrom auf der Telleroberfläche ansammeln und in den Feststoffraum des Separators abrutschen können, was insgesamt zu einer besseren Klärung einer Flüssigkeit führt.

Bei einer Kombination zweier Separatoren in Reihenschaltung kann die in Fig. 3a und 3b dargestellte negative Verschiebung des Abscheidungsgrades durch die Kombination von zwei Separatoren, also die Kombination aus einem ungetaktet und einem getaktet beschickten Separator, völlig aufgehoben werden und trotzdem eine bessere Klärung gegenüber einer Reihenschaltung aus zwei ungetakteten Separatoren erfolgen.

Die Taktung sollte idealerweise eine Periodendauer von

$$T_{end} = \frac{(r_a^2 - r_i^2)\pi h}{\overline{Q}_T \cos\alpha}$$

aufweisen, wobei $\overline{Q}_T$ in diesem Fall der durchschnittliche Zulaufstrom pro Teller ist. Dabei sollte die Frequenz der Taktung zur besseren Steuerung des Prozesses gering sein. So ist es von Vorteil, wenn die Taktung eine Frequenz von weniger als 10 Hz aufweist, um die Gefahr einer Mittelung zu vermeiden (f = 1/T).

Die Form der Zulauffunktion kann alternativ zur in Fig.3a dargestellten Trapezform bei einer konstanten Taktung auch eine Sinusform, Dreiecksform, Rechteckform oder eine Sägezahnform aufweisen.

Erfindungsgemäß weist eine Zentrifuge, insbesondere ein Separator, Mittel bzw. eine Einrichtung auf, die eine Taktung des Zulaufs des Volumenstroms einer zu verarbeitenden Flüssigkeit ermöglichen.

Derartige Mittel können aus einem Einlauf mit einem Zulaufrohr bestehen, welches im Bereich des Verteilers abgewinkelt ausgebildet ist, wobei sich die Taktung pro Rippe im Verteiler ergibt.

Alternativ oder zusätzlich können derartige Mittel aus einem Differentialgetriebe bestehen, welches zwischen dem Einlaufrohr und der Trommel der Zentrifuge, insbesondere des Separators, angeordnet ist. Je nach Teilung des Differentialgetriebes wird die Periodendauer der Taktung vorgegeben.

Alternativ oder zusätzlich kann am oder im Zulauf vorzugsweise in Strömungsrichtung außerhalb bzw. vor der Trommel auch ein Regelventil, vorzugsweise ein rotierendes Kugelkopfventil, angeordnet sein oder der Zulauf durch eine Kolbenpumpe mit einer konstanten Taktung erfolgen.

### Bezugszeichen

| | |
|---|---|
| Separatortrommel | 1 |
| Anstriebsspindel | 2 |
| Haube | 3 |
| Zulaufrohr | 4 |
| Verteiler | 5 |
| Auftrittsöffnungen | 6 |
| Steigekanal | 7 |
| Tellerpaket | 8 |
| Scheideteller | 9 |
| Feststoffaustragsraum | 10 |
| Feststoffaustragsöffnungen | 11 |
| Kolbenschieber | 12 |
| Tellerspalt | 13 |

| | |
|---|---|
| Trennteller | 14 |
| Trennteller | 15 |
| Partikel | 16 |
| Partikel | 17 |
| | |
| Produktzulauf | P |
| Feststoffphase | S |
| Drehachse | Z |
| | |
| Neigungswinkel des Tellers | $\alpha$ |
| Spaltbreite | h |
| Innenradius des Tellers | $r_i$ |
| Außenradius des Tellers | $r_a$ |
| Radialer Abstand des Partikels zur Drehachse Z zum Zeitpunkt t | $r(t)$ |
| Gemittelter Zulaufstrom | $Q_T$ |
| Zeit | t |
| Abscheidungsgrad | $\phi(d)$ |
| Durchmesser | d |

**Patentansprüche**

1. Verfahren zur Verarbeitung eines fließfähigen Produktes mit wenigstens einer im kontinuierlichen Betrieb arbeitenden Zentrifuge, das heißt wenigstens einem Separator mit vertikaler Drehachse (Z), mit einer drehbaren Zentrifugentrommel (1), in der ein Tellerpaket (8) angeordnet ist, mit folgenden Schritten:

   a) Zuführen des fließfähigen Produktes in die Zentrifugentrommel (1),
   b) Abscheiden einer Feststoffphase aus dem fließfähigen Produkt und/oder Trennen desselben in zwei oder mehr Flüssigkeitsphasen,
   c) Ableiten der einen oder mehreren Flüssigkeitsphasen durch eine oder mehr Ablaufleitung(en) für die Flüssigkeitsphase(n) und - wenn im Schritt b) auch eine Feststoffphase abgeschieden wird - Ableiten der Feststoffphase aus der Zentrifugentrommel (1),
   **dadurch gekennzeichnet, dass**
   d) das Zuführen des zu verarbeitenden Produktes im kontinuierlich oder diskontinuierlich getakteten Volumenstrom erfolgt, derart, dass der zugeführte Produktvolumenstrom getaktet zugeführt wird, ohne dass dabei die Ablaufleitung(en) für die Flüssigkeitsphase(n) geschlossen oder zusätzlich angedrosselt werden.

2. Verfahren nach Anspruch 1, **dadurch gekennzeichnet, dass** das Zuführen des zu verarbeitenden Produktes mit einer konstanten Taktfrequenz erfolgt.

3. Verfahren nach Anspruch 1 oder 2, **dadurch gekennzeichnet, dass** das Verarbeiten im kontinuierlichen Betrieb erfolgt.

4. Verfahren nach Anspruch 1 oder 2, **dadurch gekennzeichnet, dass** eine Überwachung, Steuerung und/oder Regelung der Taktfrequenz erfolgt.

5. Verfahren nach einem der vorhergehenden Ansprüche 2 oder 3, **dadurch gekennzeichnet, dass** die Taktfrequenz eine Periodendauer aufweist, welche abhängig ist von einem oder mehreren folgender Parameter:

   a) einem Innenradius ($r_i$) eines Tellers (14) des Tellerpakets (8),
   b) einem Außenradius ($r_a$) des Tellers (14),
   c) einem Zulaufstrom ($Q_T$) in den Zwischenraum (13) zwischen dem Teller (14) und einem benachbarten Teller (15),
   d) einem Tellerwinkel (a), und/oder

e) einem Abstand (h) des Tellers zu dem benachbarten Teller.

**6.** Verfahren nach einem der vorhergehenden Ansprüche, **dadurch gekennzeichnet, dass** die Periodendauer der Taktung des Volumenstroms kleiner Periodendauer T = Frequenz f / T) ist als die Zeit, $T_{end}$, die ein Partikel (16, 17) im Zwischenraum (13) zwischen dem Teller (14) und dem benachbarten Teller (15) verbleibt, wobei

$$T_{end} = \frac{(r_a^2 - r_i^2)\pi h}{Q_T \cos\alpha},$$

wobei $r_a$ der Außenradius des Tellers (14), $r_i$ der Innenradius des Tellers (14), h der Abstand des Tellers (14) zu dem benachbarten Teller (15), wobei $Q_T$ der durchschnittliche Zulaufstrom pro Teller (14) und $\alpha$ der Tellerwinkel ist.

**7.** Verfahren nach einem der vorhergehenden Ansprüche, **dadurch gekennzeichnet, dass** die Periodendauer größer ist als das Zehnfache von $T_{end}$.

**8.** Verfahren nach einem der vorhergehenden Ansprüche, **dadurch gekennzeichnet, dass** ein Vorklären der zu klärenden Flüssigkeit vor dem Zulauf in Schritt a) in einem ersten Separator mit ungetaktetem Zulauf erfolgt.

**9.** Verfahren nach einem der vorhergehenden Ansprüche, **dadurch gekennzeichnet, dass** ein Nachklären der Flüssigkeit im Anschluss an Schritt c) in einem zweiten Separator mit ungetaktetem Zulauf erfolgt.

**10.** Verfahren nach einem der vorstehenden Ansprüche, **dadurch gekennzeichnet, dass** über einen definiert langen Zeitraum T1 ein Produktvolumen V1 zugeführt wird, wobei das Zuführen des zu verarbeitenden Produktes im getakteten Betrieb derart erfolgt, dass das Produktvolumen V1 pro Zeitraum T1 gegenüber einer Zufuhr im nicht getakteten Betrieb nicht verändert wird bzw. konstant bleibt.

**11.** Verfahren nach einem der vorstehenden Ansprüche, **dadurch gekennzeichnet, dass** die Zufuhr des zu verarbeitenden Produkts getaktet derart erfolgt, dass in Abhängigkeit von der Zeit eine Zu- und Abnahme des Zulaufstroms um einen Mittelwert herum erfolgt.

**12.** Verfahren nach einem er vorstehenden Ansprüche, **dadurch gekennzeichnet, dass** die Zufuhr des zu verarbeitenden Produktes derart erfolgt, dass der Zulaufstrom im getakteten Betrieb nicht vollständig unterbrochen wird.

**13.** Verfahren nach einem er vorstehenden Ansprüche, **dadurch gekennzeichnet, dass** der Zulaufstrom getaktet mehrfach pro Minute, vorzugsweise mehrfach pro Sekunde, variiert wird.

**14.** Verfahren nach einem der vorstehenden Ansprüche, **dadurch gekennzeichnet, dass** der Zulaufstrom sinusförmig verändert wird.

**15.** Zentrifuge, d.h. Separator, mit einer drehbaren Zentrifugentrommel (1), einer Separatortrommel, mit vertikaler Drehachse (Z), in der ein Tellerpaket (8) angeordnet ist, zum Durchführen des Verfahrens nach einem der vorstehenden Ansprüche, wobei die Separatortrommel (1) ferner wenigstens einen Zulauf (4) zum Zuführen eines zu verarbeitenden Produktes und wenigstens einen Ablauf zur Ableitung wenigstens einer Flüssigkeitsphase und wenigstens einen Ablauf zur Ableitung wenigstens einer weiteren Phase, insbesondere einer Flüssigkeitsphase oder einer Feststoffphase, aufweist, **gekennzeichnet durch** eine Einrichtung zur kontinuierlichen oder diskontinuierlichen Taktung des zulaufenden Produkt-Volumenstroms in die Zentrifugentrommel (1).

**16.** Zentrifuge nach Anspruch 15, **dadurch gekennzeichnet, dass** die Einrichtung ein endständig abgewinkeltes Zulaufrohr umfasst und/oder dass die Einrichtung ein Differentialgetriebe umfasst, welches zwischen einem Zulaufrohr und einem Trommelinnenraum oder im Zulaufrohr angeordnet ist und/oder die Einrichtung ein rotierendes, vor der Trommel in den Zulauf montiertes, Kugelkopfventil umfasst und/oder dass die Einrichtung eine Kolbenpumpe umfasst.

**Claims**

**1.** A method for processing a free-flowing product using at least one centrifuge operating in continuous operation, i.e. at least one separator having vertical rotational axis (Z), having a rotatable centrifuge bowl (1), in which a disc assembly (8) is arranged, having the following steps:

a) supplying the free-flowing product into the centrifuge bowl (1),
b) deposition of a solid phase from the free-flowing product and/or separation thereof into two or more liquid phases,
c) discharging the one or more liquid phases through one or more discharge line(s) for the liquid phase(s) and - if in step b) a solid phase is also separated - discharging the solid phase out of the centrifuge bowl (1),
**characterized in that**
d) the supply of the product to be processed is performed in the continuous or discontinuous cyclic volume stream in such a way that the supplied product volume stream is cyclically supplied, without the discharge line(s) for the liquid phase(s) being closed or additionally throttled.

2. The method according to Claim 1, **characterized in that** the supply of the product to be processed is performed at a constant cyclic frequency.

3. The method according to Claim 1 or 2, **characterized in that** the processing is performed in continuous operation.

4. The method according to Claim 1 or 2, **characterized in that** monitoring, control and/or regulation of the cyclic frequency is performed.

5. The method according to one of preceding Claims 2 or 3, **characterized in that** the cyclic frequency has a period duration which is dependent on one or more of the following parameters:

a) an inner radius ($r_i$) of a disc (14) of the disc assembly (8),
b) an outer radius ($r_a$) of the disc (14),
c) an inflow stream ($Q_T$) in the intermediate space (13) between the disc (14) and an adjacent disc (15),
d) a disc angle ($\alpha$), and/or
e) a distance (h) of the disc to the adjacent disc.

6. The method according to one of the preceding claims, **characterized in that** the period duration of the cycling of the volume stream is less (period duration T = frequency f / T) than the time, $T_{end}$, which a particle (16, 17) remains

$$T_{end} = \frac{(r_a^2 - r_i^2)\pi h}{Q_T \cos\alpha},$$

in intermediate space (13) between the disc (14) and the adjacent disc (15), wherein wherein $r_a$ is the outer radius of the disc (14), $r_i$ is the inner radius of the disc (14), h is the distance of the disc (14) to the adjacent disc (15), wherein $Q_T$ is the average inlet stream per disc (14) and $\alpha$ is the disc angle.

7. The method according to one of the preceding claims, **characterized in that** the period duration is greater than ten times $T_{end}$.

8. The method according to one of the preceding claims, **characterized in that** pre-clarification of the liquid to be clarified is performed before the inflow in step a) in a first separator having non-cyclic inflow.

9. The method according to one of the preceding claims, **characterized in that** post-clarification of the liquid is performed following step c) in a second separator having non-cyclic inflow.

10. The method according to one of the preceding claims, **characterized in that** a product volume V1 is supplied over a period of time T1 of defined length, wherein the supply of the product to be processed is performed in cyclic operation in such a manner that the product volume V1 per period of time T1 is not changed or remains constant in relation to a supply in non-cyclic operation.

11. The method according to one of the preceding claims, **characterized in that** the supply of the product to be processed is performed cyclically in such a manner that an increase and decrease of the inflow stream around a mean value is performed as a function of time.

12. The method according to one of the preceding claims, **characterized in that** the supply of the product to be processed is performed in such a manner that the inflow stream is not completely interrupted in cyclic operation.

EP 2 643 092 B2

**13.** The method according to one of the preceding claims, **characterized in that** the inflow stream is cyclically varied multiple times per minute, preferably multiple times per second.

**14.** The method according to one of the preceding claims, **characterized in that** the inflow stream is varied sinusoidally.

**15.** A centrifuge, i.e. a separator, having a rotatable centrifuge bowl (1) of a separator bowl having vertical axis of rotation (Z), in which a disc assembly (8) is arranged, for carrying out the method according to one of the preceding claims, wherein the separator bowl (1) also has at least one inflow (4) for supplying a product to be processed and at least one outflow for discharging at least one liquid phase and at least one outflow for discharging at least one further phase, in particular a liquid phase or a solid phase, **characterized by** a device for continuous or discontinuous cycling of the inflowing product volume stream into the centrifuge bowl (1).

**16.** The centrifuge according to Claim 15, **characterized in that** the device comprises a terminally angled inflow pipe and/or that the device comprises a differential gearing, which is arranged between an inflow pipe and a bowl interior or in the inflow pipe and/or the device comprises a rotating ball head valve installed upstream the bowl in the inflow and/or the device comprises a piston pump.


**Revendications**

**1.** Procédé pour le traitement d'un produit fluide avec au moins une centrifugeuse fonctionnant en continu, c'est-à-dire au moins un séparateur à axe de rotation (Z) vertical, avec un tambour de centrifugeuse (1) rotatif dans lequel est disposé, un paquet de disques (8), comprenant les étapes suivantes :

a) acheminement du produit fluide dans le tambour de centrifugeuse (1),
b) séparation d'une phase solide du produit fluide et/ou séparation de celui-ci en deux ou plusieurs phases liquides,
c) extraction des une ou plusieurs phases liquides par une ou plusieurs conduites d'évacuation de la ou des phases liquides et, si une phase solide est également séparée dans l'étape b), extraction de la phase solide hors du tambour de centrifugeuse (1),
**caractérisé en ce que**
d) l'acheminement du produit à traiter s'effectue à un débit volumétrique cadencé continu ou discontinu, de telle façon que le débit volumétrique de produit acheminé soit acheminé de façon cadencée sans que la ou les conduites d'évacuation de la ou des phases liquides soient fermées ou étranglées davantage.

**2.** Procédé selon la revendication 1, **caractérisé en ce que** l'acheminement du produit à traiter s'effectue à une fréquence de cadence constante.

**3.** Procédé selon la revendication 1 ou 2, **caractérisé en ce que** le traitement a lieu en continu.

**4.** Procédé selon la revendication 1 ou 2, **caractérisé en ce que** la fréquence de cadence est surveillée, contrôlée et/ou régulée.

**5.** Procédé selon l'une des revendications 2 ou 3, **caractérisé en ce que** la fréquence de cadence présente une durée de période qui dépend d'un ou plusieurs des paramètres suivants :

a) un rayon intérieur ($r_i$) d'un disque (14) du paquet de disques (8),
b) un rayon extérieur ($r_a$) du disques (14),
c) un courant d'arrivée ($Q_T$) dans l'espace (13) compris entre le disque (14) et un disque voisin (15),
d) un angle des disques ($\alpha$) et/ou
e) une distance (h) entre le disque et le disque voisin.

**6.** Procédé selon l'une des revendications précédentes, **caractérisé en ce que** la durée de période de la cadence du débit volumétrique (durée de la période T = fréquence f/T) est inférieure au temps $T_{end}$ qu'une particule (16, 17)

9

reste dans l'espace (13) entre le disque (14) et le disque voisin (15), avec $T_{end} = \dfrac{(r_a^2 - r_i^2)\pi h}{Q_T \cos\alpha}$, où $r_a$ est le rayon extérieur du disque (14), $r_i$ le rayon intérieur du disque (14), h la distance entre le disque (14) et le disque voisin (15), où $Q_T$ est le courant d'arrivée moyen par disque (14) et $\alpha$ est l'angle des disques.

7. Procédé selon l'une des revendications précédentes, **caractérisé en ce que** la durée de période est supérieure à 10 fois $T_{end}$.

8. Procédé selon l'une des revendications précédentes, **caractérisé en ce qu'**une pré-clarification du liquide à clarifier est effectuée avant l'arrivée dans l'étape a) dans un premier séparateur à arrivée non cadencée.

9. Procédé selon l'une des revendications précédentes, **caractérisé en ce qu'**une clarification du liquide est effectuée après l'étape c) dans un deuxième séparateur à arrivée non cadencée.

10. Procédé selon l'une des revendications précédentes, **caractérisé en ce que** qu'un volume de produit V1 est amené pendant un intervalle de temps de longueur définie TI, l'acheminement du produit à traiter étant effectué de façon cadencée de telle sorte que le volume de produit V1 par intervalle de temps T1 reste inchangé ou constant par rapport à un fonctionnement non cadencé.

11. Procédé selon l'une des revendications précédentes, **caractérisé en ce que** l'acheminement du produit à traiter est effectué de façon cadencée de telle sorte qu'en fonction du temps, le courant amené augmente et diminue autour d'une moyenne.

12. Procédé selon l'une des revendications précédentes, **caractérisé en ce que** l'arrivée du produit à traiter est effectuée de telle façon que le courant amené n'est pas complètement interrompu en fonctionnement cadencé.

13. Procédé selon l'une des revendications précédentes, **caractérisé en ce que** le courant amené varie de façon cadencée plusieurs fois par minute, de préférence plusieurs fois par seconde.

14. Procédé selon l'une des revendications précédentes, **caractérisé en ce que** le courant amené varie de façon sinusoïdale.

15. Centrifugeuse, c'est-à-dire séparateur, avec un tambour de centrifugeuse (1) d'un tambour de séparateur, à axe de rotation (Z) vertical, dans lequel est disposé un paquet de disques (8), pour la mise en œuvre du procédé selon l'une des revendications précédentes, dans laquelle le tambour de séparateur (1) présente en outre au moins une arrivée (4) pour amener un produit à traiter et au moins un écoulement pour l'évacuation d'au moins une phase liquide et au moins un écoulement pour l'évacuation d'au moins une autre phase, en particulier d'une phase liquide ou d'une phase solide, **caractérisée en ce qu'**elle comporte une installation pour cadencer de façon continue ou discontinue le débit volumétrique de produit arrivant dans le tambour de centrifugeuse (1).

16. Centrifugeuse selon la revendication 15, **caractérisé en ce que** l'installation comprend un tuyau d'arrivée coudé à son extrémité et/ou **en ce que** l'installation comprend un engrenage différentiel disposé entre un tuyau d'arrivée et un espace intérieur du tambour ou dans le tuyau d'arrivée et/ou l'installation comprend une vanne à boisseau sphérique rotative montée dans l'arrivée en amont du tambour et/ou l'installation comprend une pompe à piston.

Fig. 1

Fig. 2

Fig. 3a

Volumenstrom [m³/h/Teller]

t [s]

13

Fig. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005065835 A1
- DE 566199